# EUROPEAN PATENT APPLICATION

(11) **EP 2 221 283 A1**
(43) Date of publication of application: **25.08.2010**
(21) Application number: 08783586.4
(22) Date of filing: 31.07.2008
(51) Int. Cl.: C04B 18/06

(54) **A PROCESSING METHOD FOR WASTE RESIDUE PRODUCED BY BURNING AND DESULFURIZING OIL DREGS**

(30) Priority: 08.11.2007 CN 200710114181
(71) Applicant: Teng, Shaobo, No. 51, Jilin Road Shibei District Qingsao, Shandong 266021 (CN)
(72) Inventor: Teng, Shaobo, No. 51, Jilin Road Shibei District Qingsao, Shandong 266021 (CN)
(74) Representative: O'Neill, Aoife
(86) International application number: PCT/CN2008/001396
(87) International publication number: WO 2009/059494

(57) **Abstract**

A manufacturing method for producing building material is provided. More particularly, a processing method for a waste residue produced by burning and de-sulfurizing oil dregs in oil refining is provided. The main raw material in the method is waste residue produced by burning and de-sulfurizing oil dregs, including fly ash and bottom dregs. Dilute sulfuric acid solution is added to the main raw material as the additive. The amount of additive is dependent upon the content of CaO in the main raw material and the concentration of the dilute sulfuric acid solution. The post-reaction materials can be used to produce bricks and brickwork. Therefore, the method provides for recovery of excess process materials, i.e., oil dregs, by utilizing the process materials to form building materials which process material would otherwise be placed in a landfill.

## Description

### FIELD OF INVENTION

The invention relates to the manufacturing method of a kind of construction material, and more specifically, the method used to process industrial residue produced from burning and desulphurizing petroleum coke from oil refining.

### BACKGROUND OF INVENTION

With the rapid development of oil industry, many large oil refineries have been successively built in our country. In the oil refinery, commercial oil will be refined from the oil with many times of processing and then petroleum coke will be formed. Industrial residue will be generated from burning and desulphurizing petroleum coke. Industrial residue is divided into two types. One is generally called fly ash, which will be separated with the fume from the cyclone separator and have small article and relatively high density. The other is called bottom slag, which will be precipitated in the calciner and whose article is bigger. Each year a large amount of industrial residue will be generated in the oil refineries of our country. The fly ash will be filled in the sea or ditch. The bottom slag may be used as the additive of manufacturing cements, but the amount of usage for the bottom slag is very small. Generally only 5% of one ton of materials required for manufacturing the cement are the bottom slag, and the formulation need to be modified in the process of actual stirring. Therefore, the problem of the processing and application of the above-mentioned two kinds of industrial residue hasn't been solved, which leads to large space occupation, polluted environment and resource wasting.

### SUMMARY OF INVENTION

The invention relates to the manufacturing method of a kind of construction material, and more specifically, the method used to process industrial residue generated from burning and desulphurizing petroleum coke from oil refining. The invention has settled the problem that industrial residue generated from burning and desulphurizing petroleum coke can't be thoroughly processed and applied for a long time, and put forward the method of processing the residue generated from burning and desulphurizing petroleum coke. The main material of the invention are the residue generated from burning and desulphurizing petroleum coke, including fly ash and bottom slag. The additive of dilute sulphuric acid solution will be added in the main material, and the quantity of the additive will be dependent on the content of calcium oxide contained in the main material and the density of dilute sulphuric acid solution. The method will enable thorough application and processing of industrial residue generated from oil refining, and at the same time improve comprehensive utilization of the residue, reduce the use of natural resources, implement the economic cycle, energy-saving and output-reduction, and have a positive significance on the environmental protection, and meanwhile reduce the production costs of brick or brickwork.

### DETAILED DESCRIPTION

The invention is aimed at solving the problem that industrial residue can't be processed and applied after burning and desulphurizing petroleum coke for a long time, and has put forward a method of manufacturing brick or brickwork using this kind of industrial residue. The method has enabled actual processing and application of industrial residue generated from the oil refining, and at the same time had a positive effect on environment protection and resource saving.

The invention is implemented by means of the following technical solution, that is, the method used to process the residue generated from desulphurizing petroleum coke. In the method, main materials are mixed and stirred before the additive is added and stirred one more time, enabling thorough reaction between main material and the additive. Raw materials and formulations of the method are as follows:

A: Raw material: residue generated from desulphurizing oil cake, including bottom slag;

B: Additive: dilute sulphuric acid solution whose density is between 1% and 20%;

C: Quality ratio: the ratio of main material is 100%, and the quality ratio of the additive to main material is between 0.06 and 0.6.

All of the main material may be bottom slag, or be composed of fly ash and bottom slag. The quality ratio of the former to the latter is between 0 and 2.

In the invention, after adding the additive in the main material, the time for stirring is between 2 and 10 minutes, which may make the main material and the additive have a thorough reaction. Then pour post-reaction materials into the mould, oscillate and mould into shape. And get the brick or brickwork with natural drying after mould unloading. The time required for natural drying after mould unloading are between 7 and 15 days. The time for natural drying in the summer is shorter than in the winter.

In addition, the plaster may be added in the main material, and the quality ratio of plaster to main material is between 0 and 1. The materials generated from the thorough reaction of main material and the additive are poured in the mould, oscillate and mould into shape. Plaster brickwork will be formed after mould unloading.

The sand or pearlite article may be also added in the main material, and the quality ratio of sand to main material is between 0 and 4. If the quality of added sand or pearlite article is small, such as the quality ratio is between 0% and 10%, hollow ratio of the brickwork may be improved. If the quality is relatively large, such as the quality ratio is between 2 and 4 times, the materials generated from the thorough reaction of main material, sand or pearlite article and the additive may be used as the mortar of the wall.

The profitable effect of the invention is as follows: the main element of fly ash and bottom slag is calcium sulfate and the other element is calcium oxide. When the additive of dilute sulphuric acid solution is added in the fly ash and residue, calcium oxide will first react with the water contained in dilute sulphuric acid solution and then alkaline matter will be generated. The alkaline matter has unstable characteristic, and therefore will have neutralization reaction with sulphuric acid of dilute sulphuric acid solution. That is:

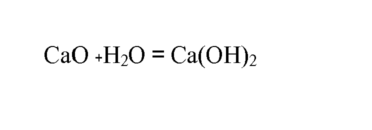

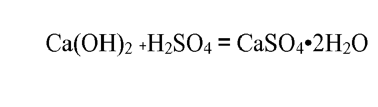

After the above-mentioned chemical reaction, the content of plaster contained in the material will reach above 75%. By controlling the quality and the density of added dilute sulphuric acid solution, calcium oxide of industrial residue won't be completely neutralized, that is to say, calcium oxide of between 10% and 20% will be still retained in the residue. Or calcium oxide will be completely neutralized. The amount of added dilute sulphuric acid solution is dependent on the density of sulphuric acid solution and the content of calcium oxide contained in industrial residue. If calcium oxide of between 10% and 20% are retained in the material, compressive strength and water resistance of brick or brickwork may be improved. If calcium oxide contained in industrial residue are completely neutralized, ultimately-formed brick or brickwork has relatively low compressive strength, which will make definite impact on various performance.

Magnesium sulfate will be generated by the reaction of magnesium oxide in the residue and sulphuric acid in the additive. However, very small content of magnesium oxide in the residue will make little impact on the stability of the material. At the same time, other elements contained in the residue are generated from baking with the high temperature of 800°C, which have high stability and small content, and won't have the reaction with sulphuric acid, and therefore will have little impact on the strength and stability of plaster.

The test has proved that hollow brickwork built from processing the residue generated from burning and desulphurizing petroleum coke by means of the method of the invention has very high breaking strength and compressive strength, and at the same time has the respiration and water resistance of the plaster. Even if after water absorption, the brickwork has very little strength loss, and light weight, and its density won't exceed 700 kilogram per cubic metre. Especially after pearlite article is added in the main material, hollow ratio of brickwork will reach 45%. Therefore, manufactured brick or brickwork by means of the method is called lightweight building material. The actual test has proved that brick or brickwork built from the reside by means of the method has an average compressive strength of 10.2 MPa. Their internal radiation index is 0.2, external radiation index is 0.5, and relative water content ratio is 33%, all of which have reached specified technical requirements.

In addition, plaster brickwork built from adding the plaster in the main material has short initial setting time and high strength. The mortar built from adding the sand or pearlite article in the main material has so high strength as to be difficult to crack, and has relatively strong adhesive ability. More importantly, the method provided in the invention has settled the problem of application and processing of industrial residue generated from oil refining, and at the same time improved comprehensive utilization of the residue, reduced the use of natural resources, implemented the economic cycle, energy-saving and output-reduction, and had a positive significance on the environmental protection, and meanwhile saved the investment, reduced the production costs ofbrick or brickwork.

### Specific implementation methods

*Implementation example 1*

When burning the petroleum coke, only petroleum coke will be burned, or the burning will occur after adding the carbon in the petroleum coke. With the content of sulphur contained in the oil changing, the content of added calcium oxide when desulphurizing will also change. Therefore the content of elements contained in the fly ash and bottom slag for each time is different. If no carbon is added when burning the petroleum coke, the theoretical values for the content of each element contained in the fly ash by calculation are as follows:

| Serial number | Name and symbol | Content(weight ratio) |
|---|---|---|
| 1 | Calcium carbonate (CaCO₃) | 4.78% |
| 2 | Calcium oxide (CaO) | 27.62% |
| 3 | Magnesium carbonate (MgCO₃) | 0 |
| 4 | Magnesium oxide (MgO) | 2.72% |
| 5 | Calcium sulfate (CaSO₄) | 58.27% |
| 6 | Inert material | 0.64% |
| 7 | Burning ash | 0.29% |
| 8 | Unburnt carbon | 5.69% |

The theoretical values for the content of each element contained in the bottom slag are as follows:

| Serial number | Name and symbol | Content(weight ratio) |
|---|---|---|
| 1 | Calcium carbonate (CaCO₃) | 8.19% |
| 2 | Calcium oxide (CaO) | 24.31 % |
| 3 | Magnesium carbonate (MgCO₃) | 0.02% |
| 4 | Magnesium oxide (MgO) | 1.22% |
| 5 | Calcium sulfate (CaSO₄) | 51.16 |
| 6 | Inert material | 11.39% |
| 7 | Burning ash | 0.75% |
| 8 | Unburnt carbon | 2.96% |

Mix fly ash and bottom slag with the status of dry powder according to the weight ratio of 7 to 10, which will make these two kinds of elements become the main material. Then the sand with the quality ratio of 1.5% to the main material is added, and mix fly ash, bottom slag and sand, and stir in the machine. In the process of stirring, the additive of dilute sulphuric acid solution whose density is 8% is added in the main material, and the quality ratio of the solution to the main material is 40%. Stirring speed should be increased in the process of adding dilute sulphuric acid solution. About five minutes of stirring time is required after adding the additive in order to make the additive and main material have a thorough reaction. After the reaction, about 15% of calcium oxide will retain in the formed material.

After the completion of stirring, formed wet material is poured in the mould of brick press. Due to 2 hours of initial setting time of wet material, various brickworks should be built by oscillating the wet material and molding into shape before initial setting of the material. Once the brickworks begin to have initial setting, let them mould unloading and the time of between 7 and 15 days is required for natural drying, and then lightweight and environment-friendly high-quality building materials will be formed. The time for natural drying in the summer is relatively short.

The reaction of the residue and sulphuric acid may also be completed by the following procedures. First, add the water in the residue and stir evenly so as to make the water and calcium oxide contained in the residue have a thorough reaction. Then sulphuric acid is added. Due to uneven reaction of sulphuric acid and the residue, the brick or brickwork built by means of this method has the defect of unstable performance. The procedures of this method are so complicated as to be unsuitable for industrial production.

In this implementation example, only theoretical values for the content of each element contained in fly ash and bottom slag are given. In the process of actual production, with different weight of added carbon when burning and different content of sulphur contained in the oil, the content of each element in fly ash and bottom slag is increasingly changing, especially for fly ash. Therefore, when implementing the technical protocol of the invention, the content of each element in fly ash and bottom slag should be first identified, especially that of calcium oxide. Then the quality of dilute sulphuric acid solution is dependent on the content of calcium oxide. In general, if the quality ratio of fly ash to bottom slag in the main material is between 0 and 0.7, built brick or brickwork will have best performance. At that time, the density of added dilute sulphuric acid solution is at best between 5% and 10%, and the quality ratio to main material is about between 35% and 40%. Of course, the density of dilute sulphuric acid solution may also be increased so as to make sulphuric acid and calcium oxide in industrial residue have a thorough reaction, which will lead to poor strength and hardness of built brick or brickwork.

As mentioned above, since a quantity of carbon will be added when burning petroleum coke, the content of unburnt carbon in fly ash and bottom slag will also increase. However, the amount of added carbon won't exceed the ratio of 50%. The test has proved that the increase of the content of unburnt carbon will have an impact on compressive strength of built brick or brickwork. But even if the weight ratio of added carbon to petroleum coke is 50%, the compressive strength can be ensured to exceed 5MPa.

*Implementation example 2*

The plaster with the quality ratio of 20% is added in the main material. Stir the main material and the plaster so as to mix up them evenly. After a quantity of additive of dilute sulphuric acid solution is poured, continue to stir for between 2 and 10 minutes in order to make the main material and the additive have a thorough reaction. After the completion of stirring, formed wet material is poured in the mould of brick press. Due to the condensation of added plaster, initial setting time of the material is 15 minutes. Before initial setting of material, various bricks may be built by oscillating wet material and molding into shape. After the initial setting of the brickwork, plaster brickwork may be built by mould unloading and natural drying.

The characteristics of plaster brickwork are short initial setting time and high strength. If the amount of plaster added in the main material is greater, initial setting time is shorter; therefore the amount of added plaster may be dependent on initial setting time. Others are same as Implementation Example 1.

*Implementation example 3*

The sand is added in the main material, whereas the quality of sand is twice of the quality of main material. Stir the main material and the sand so as to mix up them evenly. After a quantity of additive of dilute sulphuric acid solution is poured, continue to stir in order to make the main material and the additive have a thorough reaction. Wet material formed after the completion of stirring may be used as the mortar of the wall, which has so high strength similar with the cement as to be difficult to crack, and has stronger adhesive ability than the cement. Others are same as Implementation Example 1.

## Claims

1. A method used to process the residue generated from burning and desulphurizing petroleum coke, whereas main materials are mixed and stirred before the additive is added and stirred one more time, enabling thorough reaction between main material and the additive. Its characteristics are: its raw materials and formulations are as follows:
a. Main material: residue generated from desulphurizing oil cake, including bottom slag;
b. Additive: dilute sulphuric acid solution whose density is between 1% and 20%;
c. Quality ratio: the ratio of the additive of dilute sulphuric acid solution to main material is between 0.06 and 0.6.

2. According to the method used to process the residue generated from burning and desulphurizing petroleum coke described in Claim 1, its characteristic is: main material is 100% bottom slag.

3. According to the method used to process the residue generated from burning and desulphurizing petroleum coke described in Claim 1, its characteristic is: main material is made up of fly ash and bottom slag, and the quality ratio of the former to the latter is between 0 and 2.

4. According to the method used to process the residue generated from burning and desulphurizing petroleum coke described in Claim 1, its characteristic is: the plaster is added in the main material, and the quality ratio of the plaster to the main material is between 0 and 1.

5. According to the method used to process the residue generated from burning and desulphurizing petroleum coke described in Claim 1 or Claim 4, its characteristic is: pour post-reaction materials into the mould, oscillate and mould into shape. And get the brick or brickwork with natural drying after mould unloading.

6. According to the method used to process the residue generated from burning and desulphurizing petroleum coke described in Claim 5, its characteristic is: after the additive is added in the main material, the time for stirring is between 2 and 10 minutes.

7. According to the method used to process the residue generated from burning and desulphurizing petroleum coke described in Claim 5, its characteristic is: the time for natural drying after mould unloading is between 7 and 15 days.

8. According to the method used to process the residue generated from burning and desulphurizing petroleum coke described in Claim 1, its characteristic is: pearlite article or the sand is added in the main material, and the quality ratio of pearlite article or the sand to main material is between 0 and 4.
A manufacturing method for building material is provided. Concretely, a processing method for a waste residue produced by burning and desulfurizing oil dregs in oil refining is provided. Waste residue produced by burning and desulfurizing oil dregs in oil refining hasn't been disposed and utilized at all for a long time, thus a method for processing the waste residue is provided. The main raw material in the method is waste residue produced by burning and desulfurizing oil dregs, including fly ash and bottom dregs. Dilute sulfuric acid solution is putted into the main raw material as the additive. The amount of additive is depended upon the content of CaO in the main raw material and the concentration of the dilute sulfuric acid solution. The advantages of the method are as follows: processing and utilizing essentially waste residue produced in oil refining, improving the rate of utilization, decreasing the amount of natural resources used, reducing the cost of producing brick and block, saving energy resources, decreasing waste material otherwise put in landfills or the ocean and protecting the environment.
